# EUROPÄISCHE PATENTANMELDUNG

(11) **EP 1 795 681 A2**
(43) Veröffentlichungstag der Anmeldung: **13.06.2007**
(21) Anmeldenummer: 06024879.6
(22) Anmeldetag: 01.12.2006
(51) Int. Cl.: E05D 5/14, F16C 11/04, F16C 17/02, F16C 33/04

(54) **Drehlager für einen Lagerkörper**

(30) Priorität: 06.12.2005 DE 102005058373
(71) Anmelder: Adolf Dietz GmbH & Co. KG, 73265 Dettingen unter Teck (DE)
(72) Erfinder: Bauer, Hans, 73265 Dettingen/Teck (DE)
(74) Vertreter: Ruckh, Rainer Gerhard

(57) **Zusammenfassung**

Die Erfindung betrifft ein Drehlager für einen Lagerkörper. Dieser besteht aus einem lagernden Lagerteil (3) und einem bezüglich diesem drehbar gelagerten Lagerteil (2) und umfasst ein Einlegeteil (1). Das Einlegeteil (1) weist ein zylindrisches Wellensegment (4) auf. Auf jedem längsseitigen Ende des Wellensegments (4) sitzt eine Lagerbuchse (5) auf und ist fest mit diesem verbunden. Die Lagerbuchsen (5) selbst sind fest mit dem lagernden Lagerteil (3) verbunden. Als weitere Komponente des Einlegeteils (1) ist eine auf der Mantelfläche des zwischen den Enden liegenden zentralen Teils des Wellensegments (4) drehbare Führungshülse (6) vorgesehen, deren äußere Mantelfläche mit dem gelagerten Lagerteil (2) fest verbunden ist. Alternativ weist das Einlegeteil (1) ein zylindrisches Wellensegment (4) auf, dessen längsseitige Enden in Lagerbuchsen (5) als weitere Bestandteile des Einlegeteils (1) drehbar gelagert ist. Die Mantelfläche des zwischen den Lagerbuchsen (5) liegenden zentralen Teils des Wellensegments (4) ist mit dem gelagerten Teil (2) fest verbunden. Die äußeren Mantelflächen der Lagerbuchsen (5) sind fest mit dem lagernden Lagerteil (3) verbunden.

## Beschreibung

Die Erfindung betrifft ein Drehlager für einen Lagerkörper gemäß dem Oberbegriff der Ansprüche 1 und 9.

Ein derartiges Drehlager ist aus der DE 100 33 487 C2 bekannt. Mit dem dort beschriebenen Drehlager kann ein drehbar gelagertes Lagerteil gegen ein lagerndes Lagerteil bewegt werden. Die Lagerteile bestehen dabei aus Gussteilen, die in einem Gießprozess hergestellt werden. Zur Ausbildung des Drehlagers ist ein Einlegeteil vorgesehen, welches in die Gussform zur Herstellung der Lagerteile eingelegt und bei dem Gießprozess mit der Gussmasse umgossen wird.

Als Einlegeteil sind dabei zwei ineinander gleitende, zylindrische Lagerbuchsen vorgesehen, die ineinander spielfrei gleitende, glatte Lagerflächen aufweisen. Die Außenseiten der Lagerbuchsen sind aufgeraut, wobei die Außenseite einer Lagerbuchse mit dem lagernden Lagerteil und die Außenseite der zweiten Lagerbuchse mit dem gelagerten Lagerteil fest verbunden sind.

Derartige Drehlager sind insbesondere Bestandteile von Scharnieren, die in Kraftfahrzeugen zur beweglichen Lagerung von Karosserieteilen, wie zum Beispiel Motorhauben oder Heckklappen, eingesetzt werden.

Wesentliche Anforderungen an derartige Drehlager sind eine spielfreie Führung der gegeneinander beweglichen Lagerkomponenten, wobei gleichzeitig ein Verkanten oder Verhaken der Lagerkomponenten vermieden werden muss, damit eine gute Gängigkeit der gegeneinander beweglichen Lagerkomponenten gegeben ist.

Bei dem in der DE 100 33 487 C2 beschriebenen Drehlager kann zwar durch eine glatte Ausbildung der Oberflächen der Lagerflächen der gegeneinander drehbaren Lagerbuchsen erreicht werden, dass diese Lagerbuchsen als Einlegeteil spielfrei in der Gussform liegen. Bei dem Gießprozess wird jedoch auf die den Lagerflächen gegenüberliegenden Außenseiten der Lagerbuchsen die Gussmasse aufgebracht. Durch den Druck, mit dem die Gussmasse auf die Außenseiten der Lagerbuchsen aufgebracht wird, entstehen entsprechende Kräfte zwischen den Lagerflächen der Lagerbuchsen. Da diese beim Gussvorgang wirkenden Kräfte nicht gezielt vorgegeben werden können und damit prozesstechnisch nicht beherrschbar sind, führen diese zu unreproduzierbaren Lageverschiebungen der Lagerbuchsen, was wiederum während des Betriebs des Drehlagers zu unerwünschten Reibungseffekten und dadurch bedingt zu stark verschlechterten Laufeigenschaften des Drehlagers führt.

Ein weiterer Nachteil des in der DE 100 33 487 C2 besteht darin, dass zur Ausbildung eines Scharniers oder dergleichen zwei Einlegeteile, bestehend aus jeweils zwei ineinander gleitenden Lagerbuchsen, verwendet werden müssen. Diese müssen exakt längs einer Geraden liegend in die Gussform eingelegt werden, damit nach dem Gießprozess eine längs dieser Geraden verlaufende Drehachse erhalten wird. Bereits durch kleinste Verkippungen oder Verkantungen der Lagerbuchse der Einlegeteile liegen deren Symmetrieachsen außerhalb der Drehachse, was zu einer Unwucht und damit zu einer Verschlechterung der Laufeigenschaften des Drehlagers führt.

Schließlich ist nachteilig, dass das Drehlager der DE 100 33 487 C2 beschriebenen Drehlagers, bedingt durch die Ausbildung des Einlegeteils in Form zweier ineinander liegenden Lagerbuchsen, ein unerwünscht geringes Führungsverhältnis aufweist. Das Führungsverhältnis ist definiert durch den Quotienten der Länge geteilt durch den Durchmesser dieser Drehlagerkomponenten.

Damit die Gussmasse beim Gießprozess vollständig und reproduzierbar in die Hohlräume der jeweiligen Lagerbuchse der Einlegeteile eingeführt wird, muss der Durchmesser einer Lagerbuchse typischerweise größer als dessen Länge sein, das heißt, das Führungsverhältnis ist auf Werte kleiner 1 beschränkt.

Der Erfindung liegt die Aufgabe zugrunde, ein Drehlager der eingangs genannten Art bereitzustellen, welches kostengünstig herstellbar ist und dabei gute Laufeigenschaften aufweist.

Zur Lösung dieser Aufgabe sind die Merkmale der Ansprüche 1 und 9 vorgesehen. Vorteilhafte Ausführungsformen und zweckmäßige Weiterbildungen der Erfindung sind in den Unteransprüchen beschrieben.

Das erfindungsgemäße Drehlager bildet eine drehbare Lagerung eines gelagerten Lagerteils an einem lagernden Lagerteil. Gemäß einer ersten Alternative der Erfindung weist das Einlegeteil zur Ausbildung des erfindungsgemäßen Drehlagers ein zylindrisches Wellensegment auf. Auf jedem längsseitige Ende des Wellensegments sitzt eine Lagerbuchse auf und ist fest mit diesem verbunden. Die Lagerbuchsen selbst sind fest mit dem lagernden Lagerteil verbunden. Als weitere Komponente des Einlegeteils ist eine auf der Mantelfläche des zwischen den Enden liegenden zentralen Teils des Wellensegments drehbare Führungshülse vorgesehen, deren äußere Mantelfläche mit dem gelagerten Lagerteil fest verbunden ist.

Ein wesentlicher Vorteil dieses Drehlagers besteht darin, dass durch die Ausbildung der gegeneinander beweglichen Komponenten des Drehlagers in Form der auf dem Wellensegment drehbar gelagerten Führungshülse die Laufeigenschaften des Drehlagers exakt und unabhängig von den Prozessparametern des Gießprozesses zur Herstellung des Lagerkörpers vorgegeben werden können.

Ein wesentlicher Aspekt ist hierbei, dass die Komponenten des Einlegeteils zur Ausbildung des Drehlagers nicht zwischen dem lagernden und zu lagernden Teil angeordnet sind.

Dadurch wird vermieden, dass bei dem Gießprozess zur Anformung des lagernden und gelagerten Teils an das Einlegeteil durch die beim Gießprozess entstehenden Druckkräfte von beiden Seiten, das heißt, von der Seite des lagernden Teils und des gelagerten Teils, Kräfte generiert werden, die zu einem Verkanten der gegeneinander beweglichen Lagerkomponenten und damit zu einer Verschlechterung der Laufeigenschaften des Drehlagers führen würden.

Vielmehr sind bei dem Drehlager gemäß Anspruch 1 die Enden des Wellensegments aus dem Bereich der Führungshülse herausgeführt. Damit beeinflusst der Gießprozess zur Anformung des lagernden Teils direkt an den Enden des Wellensegments oder auf dort aufgebrachten Lagerbuchsen die Laufeigenschaften der Führungshülse nicht.

Gemäß einer ersten Ausführungsform ist die Führungshülse von einem hohlzylindrischen Massivteil ausgebildet. Das Wellensegment weist in diesem Fall einen an den Innendurchmesser der Führungshülse angepassten kreisförmigen Querschnitt auf. Durch die starre Wand der Führungshülse und die rotationssymmetrische Ausbildung der Führungshülse, die eine weitgehende Aufhebung der beim Gießprozess wirkenden Kräfte zur Folge hat, ist gewährleistet, dass ein unerwünschtes Verkanten der Führungshülse auf dem Wellensegment vermieden wird. Durch geeignete Dimensionierung der Führungshülse wird eine spielfreie oder spielarme Führung der Führungshülse auf dem Wellensegment erzielt. Somit weist das so ausgebildete Drehlager gute Laufeigenschaften auf, wobei dieses mit dem erfindungsgemäßen Einlegeteil rationell und kostengünstig herstellbar ist.

Gemäß einer weiteren Ausführungsform ist die Führungshülse nicht von einem Massivteil gebildet. Vielmehr besteht die Wand der hohlzylindrischen Führungshülse aus einem mehrlagigen spiralförmig geformten Flachmaterial, das heißt, es wird eine gewickelte Führungshülse eingesetzt. Diese Ausführungsform ist deshalb besonders vorteilhaft, da bei dem Gießprozess zur Anformung des gelagerten Lagerteils an die Führungshülse die Wand der Führungshülse durch ihre spiralförmige Ausbildung in gewissem Umfang elastische Eigenschaften aufweist und somit unter dem beim Gießprozess ausgeübten Druck nachgibt und sich dabei an die Mantelfläche des Wellensegments anlegt, wodurch eine spielfreie Führung der Führungshülse auf dem Wellensegment erzielt wird. Weiterhin wird durch die federnden Eigenschaften der Wand der Führungshülse ein Verkanten des Wellensegments und der Führungshülse verhindert, wodurch sehr gute Laufeigenschaften des Drehlagers erhalten werden.

In einer weiteren vorteilhaften Ausführungsform weist die Führungshülse eine strukturierte Kontur mit in deren Längsrichtung verlaufenden linienförmigen Auflageflächen auf dem Wellensegment auf. Vorteilhaft bei dieser Ausführungsform ist, dass die Führungshülse durch die begrenzten Auflageflächen an dem Wellensegment nicht verkantet. Die Führungshülse kann dabei als Massivteil ausgebildet sein. Alternativ kann auch in diesem Fall die Führungshülse aus einem spiralförmig gewickelten Material bestehen. Bei einer derartig spiralförmig gewickelten Führungshülse kann das Wellensegment auch einen nicht kreisförmigen Querschnitt mit Kanten und Wellenstrukturen aufweisen. In diesem Fall wird die spiralförmige Führungshülse bei Drehen auf dem Wellensegment etwas aufgeweitet, um die Wellen oder Kanten auf dem Wellensegment zu überwinden. Bei dieser Ausführungsform wird eine spielfreie kontaktbehaftete Führung der Führungshülse auf dem Wellensegment erzielt, ohne dass hierbei die Führungshülse an dem Wellensegment verkantet.

Gemäß einer zweiten Alternative der Erfindung weist das Einlegeteil ein zylindrisches Wellensegment auf, dessen längsseitige Enden in Lagerbuchsen als weitere Bestandteile des Einlegeteils drehbar gelagert sind. Die Mantelfläche des zwischen den Lagerbuchsen liegenden zentralen Teils des Wellensegments ist mit dem gelagerten Teil fest verbunden. Die äußeren Mantelflächen der Lagerbuchsen sind fest mit dem lagernden Lagerteil verbunden.

Bei dieser Variante bildet das Wellensegment die bewegliche Lagerkomponente. Vorteilhaft hierbei ist, dass die Mantelfläche des zentralen Teils des Wellensegments, an welcher das gelagerte Teil durch Aufbringen der Gussmasse angeformt wird, außerhalb des Bereichs der in den Lagerbuchsen geführten Enden des Wellensegments liegt. Die auf die Mantelfläche des zentralen Teil des Wellensegments wirkenden Kräfte zur Anformung des gelagerten Teils während des Gießprozesses beeinflussen somit nicht die Führung der Enden der Wellensegmente in den Lagerbuchsen, so dass auch bei dieser Variante gute Laufeigenschaften des Drehlagers erhalten werden.

Schließlich werden bei beiden Varianten der Erfindung gute Laufeigenschaften erhalten, da durch geeignete Dimensionierung der Komponenten des Einlegeteils, insbesondere der beweglichen Komponenten des Drehlagers ein optimiertes Führungsverhältnis erhalten werden kann. Gute Laufeigenschaften des Drehlagers werden dann erhalten, wenn dieses Führungsverhältnis Werte annimmt, die größer als 1,5 sind.

Ein weiterer wesentlicher Vorteil besteht bei beiden Varianten der Erfindung darin, dass das Einlegeteil eine vorgefertigte Montageeinheit bildet, die sämtliche Komponenten zur Ausbildung eines Drehlagers, beispielsweise zur Bildung eines Scharniers, enthält. Dies bedeutet, dass zur Herstellung des Drehlagers nur dieses eine Einlegeteil in die Gussform eingelegt werden muss. Dadurch werden Beeinträchtigungen der Laufeigenschaften des Drehlagers, die sich durch Verkanten mehrerer Einlegeteile in der Gussform ergeben könnten, vermieden.

In einer vorteilhaften Ausführungsform sind bei beiden Varianten der Erfindung die den Lagerkörper bildenden Lagerteile als metallische Druckgussteile ausgebildet. Bevorzugt bestehen die Lagerteile aus Aluminium- oder Magnesiumdruckgussteilen. Alternativ können die Lagerteile aus Kunststoff bestehen.

Das Wellensegment des Einlegeteils besteht bevorzugt aus Stahl, während die restlichen Komponenten des Einlegeteils aus Zink bestehen.

Alternativ können die Komponenten des Einlegeteils auch aus Kunststoff bestehen.

Die Erfindung wird im Nachtstehenden anhand der Zeichnungen erläutert. Es zeigen:
- Figur 1:: Erstes Ausführungsbeispiel eines Drehlagers mit einem Einlegeteil.
- Figur 2:: Querschnitt durch das Einlegeteil gemäß Figur 1 in der mit A bezeichneten Ebene.
- Figur 3:: Variante des Einlegeteils gemäß Figuren 1 und 2 in einer Querschnittsdarstellung.
- Figur 4:: Variante der Ausführungsform des Einlegeteils gemäß Figur 3 mit einem Wellensegment mit nicht kreisförmigem Querschnitt.
- Figur 5:: Weitere Variante des Einlegeteils gemäß Figuren 1 und 2 in einer Querschnittsdarstellung.
- Figur 6:: Zweites Ausführungsbeispiel eines Drehlagers mit einem Einlegeteil.

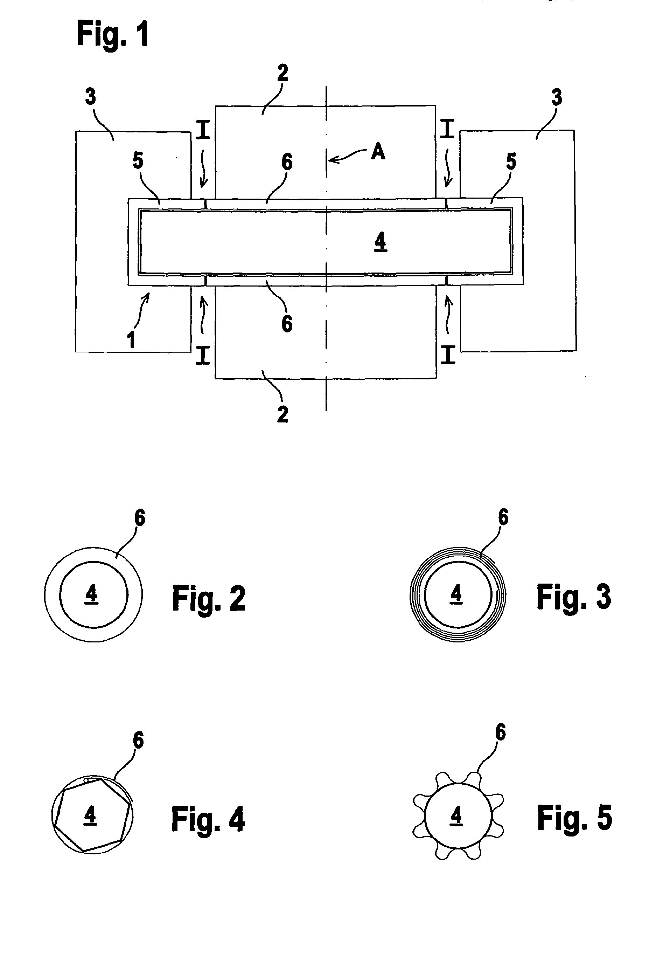

Figur 1 zeigt ein erstes Ausführungsbeispiel eines Drehlagers, welches im vorliegenden Fall Bestandteil eines Scharniers für eine Heckklappe oder Motorhaube in einem Kraftfahrzeug ist.

Das Drehlager besteht im Wesentlichen aus einem Einlegeteil 1, welches ein gelagertes Lagerteil 2 drehbar an ein stationäres lagerndes Lagerteil 3 koppelt. Figur 1 zeigt die in Abstand gegenüberliegenden Segmente des lagernden Lagerteils 3, zwischen welchen das gelagerte Lagerteil 2 angeordnet ist.

Das mehrteilig ausgebildete Einlegeteil 1 bildet eine vorgefertigte Einheit und weist eine im Wesentlichen kreiszylindrische Außenkontur auf.

Das Einlegeteil 1 gemäß Figur 1 weist ein zylindrisches Wellensegment 4 auf. Der kreisförmige Querschnitt des Wellensegments 4 ist über seine gesamte Länge konstant. Im vorliegenden Fall besteht das Wellensegment 4 aus einem Massivteil aus Stahl. Prinzipiell kann das Wellensegment 4 auch rohrförmig ausgebildet sein.

Auf den längsseitigen Enden des Wellensegments 4 ist jeweils eine Lagerbuchse 5 aufgebracht. Die Lagerbuchsen 5 bestehen im vorliegenden Fall aus einem Zinkteil und sind identisch ausgebildet. Die Lagerbuchsen 5 weisen jeweils eine hohlzylindrische Form auf, wobei ein Ende mit einem Boden abgeschlossen ist und das andere Ende eine Öffnung zur Einführung eines Endes des Wellensegments 4 aufweist. Die Innendurchmesser der Lagerbuchsen 5 sind an die Außendurchmesser der Enden der Wellensegmente 4 so angepasst, dass die Enden der Wellensegmente 4 drehfest in den Lagerbuchsen 5 gelagert sind.

Der zentrale Teil des Wellensegments 4 zwischen den die Lagerbuchsen 5 aufnehmenden Enden ist von einer Führungshülse 6 umschlossen. Die Führungshülse 6 besteht in diesem Fall aus einem Massivteil aus Zink. Figur 2 zeigt eine Querschnittsdarstellung des zentralen Teils des Wellensegments 4 mit der an der Mantelfläche des Wellensegments 4 anliegenden Führungshülse 6. Der Innendurchmesser der Führungshülse 6 ist so gewählt, dass diese das einen kreisförmigen Querschnitt aufweisende Wellensegment 4 spielfrei oder spielarm umschließt und dabei drehbar bezüglich des Wellensegments 4 ist.

Die Länge der Führungshülse 6 ist so gewählt, dass deren längsseitige Ränder mit geringem Spiel an die Ränder der Lagerbuchse 5 angrenzen. Die Wandstärke der Führungshülse 6 ist an die Wandstärken der Lagerbuchsen 5 angepasst, so dass deren äußere Mantelflächen fluchten. Die auf dem Wellensegment 4 gelagerten Lagerbuchsen 5 und die Führungshülse 6 ergänzen sich so zur kreiszylindrischen Außenkontur des Einlegeteils 1.

Zur Herstellung des Drehlagers wird das Einlegeteil 1 in eine nicht dargestellte Gussform eingelegt. Zur Ausbildung der Lagerteile 2, 3 wird eine Gussmasse, die insbesondere aus Aluminium oder Magnesium besteht, in die Gussform eingegossen. Alternativ kann die Gussmasse aus Kunststoff bestehen. Durch diesen Gießprozess erfolgt die Anformung der Lagerteile 2, 3 an das Einlegeteil 1. Die Gussform ist dabei so ausgebildet, dass das lagernde Lagerteil 3 und das gelagerte Lagerteil 2 als Druckgussteile oder Kunststoffspritzteile die in Figur 1 dargestellten Ausformungen aufweisen. Insbesondere werden Segmente der Gussform als Blenden in die in Figur 1 mit I bezeichneten Zwischenräume bis an das Einlegeteil 1 herangeführt, um die in Figur 1 dargestellte räumliche Trennung des gelagerten Lagerteils 2 von den Segmenten des lagernden Lagerteils 3 zu erhalten. Die Blenden sind so ausgebildet, dass in die Zwischenräume zwischen Führungshülse 6 und den Lagerbuchsen 5 keine Gussmasse eindringt, was die Drehbarkeit der Führungshülse 6 beeinträchtigen würde.

Durch die am Wellensegment 4 drehbar gelagerte Führungshülse 6 kann das an die Führungshülse 6 angeformte gelagerte Lagerteil 2 gegenüber den stationär lagernden Lagerteilen 3 gedreht werden.

Mit der Führungshülse 6 sind sämtliche Drehlagerungen zur Ausbildung des Drehlagers in dem Einlegeteil 1 integriert. Dies bedeutet, dass zur Ausbildung des Drehlagers für ein Scharnier oder dergleichen nur das eine in Figur 1 dargestellte Einlegeteil 1 als vorgefertigte und vormontierte Einheit benötigt wird.

Figur 3 zeigt eine weitere Variante der Ausführungsform gemäß Figur 1. In diesem Fall besteht die Wand der hohlzylindrischen Führungshülse 6 nicht aus massivem Material sondern aus einem spiralförmigen, mehrlagigen, bandförmigen Material aus Zink, das heißt, es wird eine gewickelte Führungshülse 6 erhalten. Figur 3 zeigt die Führungshülse 6 im Querschnitt, wobei deren Form und Wandstärke über deren Länge konstant ist.

Durch die mehrlagige Umwicklung des Wellensegments 4 mit dem die Wand der Führungshülse 6 bildenden bandförmigen Material weist die Führungshülse 6 in gewissen Grenzen elastische Eigenschaften auf. Bei Anformung des gelagerten Lagerteils 2 auf die äußere Mantelfläche der Führungshülse 6 wird durch den bei Einführen der Gussmasse wirkenden Druck die spiralförmige Führungshülse 6 gegen die Mantelfläche des Wellensegments 4 gepresst. Dadurch wird eine spielfreie Führung der Führungshülse 6 auf dem Wellensegment 4 erzielt. Durch die federnden Eigenschaften der spiralförmigen Führungshülse 6 ist gleichzeitig gewährleistet, dass die Führungshülse 6 ohne Verkanten an der Mantelfläche des Wellensegments 4 drehbar ist.

Figur 4 zeigt eine Variante der Ausführungsform gemäß Figur 3. Im Unterschied zur Ausführungsform gemäß Figur 3 weist das Wellensegment 4 im Bereich der Führungshülse 6 keinen kreisförmigen Querschnitt auf. Der Querschnitt des Wellensegments 4 weist in diesem Fall die Form eines Vielecks auf, wobei der Querschnitt des Wellensegments 4 in dem Bereich der aufliegenden Führungshülse 6 konstant ist. Die Ecken des Wellensegments 4 können auch abgerundet sein, so dass dieses eine wellenförmige Außenkontur aufweist. Die Führungshülse 6 ist wiederum aus einem spiralförmig gewickelten Material gebildet. Durch die Kontur des Wellensegments 4 werden in Längsrichtung des Einlegeteils 1 verlaufende linienförmige Auflageflächen erhalten. Mit dieser Ausbildung des Wellensegments 4 wird eine besonders spielarme Führung der Führungshülse 6 ermöglicht, ohne dass diese am Wellensegment 4 verkantet.

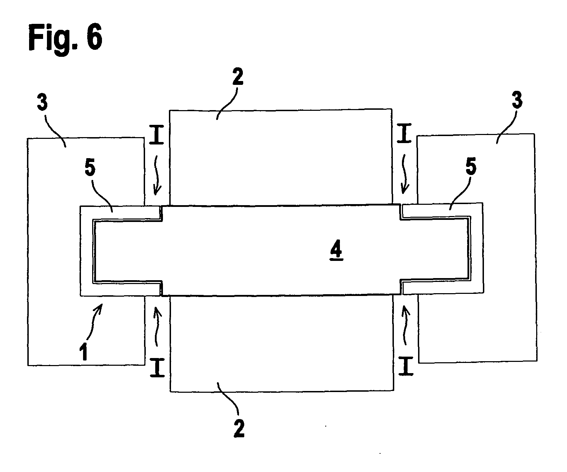

Figur 5 zeigt eine weitere Variante eines Einlegeteils 1 für die Ausführungsform gemäß Figur 1. In diesem Fall weist die als Massivteil ausgebildete Führungshülse 6 einen wellenförmigen Querschnitt auf, der über die Länge der Führungshülse 6 konstant ist. Demgegenüber weist das Wellensegment 4 einen kreisförmigen Querschnitt auf. Auch bei dieser Ausführungsform werden linienförmige Auflageflächen zwischen Führungshülse 6 und Wellensegment 4 erhalten.

Die Ausführungsformen gemäß den Figuren 4 und 5 können auch derart kombiniert werden, dass auf dem Wellensegment 4 gemäß Figur 4, welches einen nicht kreisförmigen Querschnitt aufweist eine Führungshülse 6 aufgebracht ist, die aus spiralförmig gewickeltem wellenförmigem Material besteht. In diesem Fall weisen sowohl die Führungshülse 6 als auch das Wellensegment 4 eine strukturierte Kontur auf. Bei Drehen der Führungshülse 6 werden dabei die wellenförmigen Strukturen der Führungshülse 6 über die Kontur- oder Wellenstruktur des Wellensegments 4 geschoben. Dabei liegt die Führungshülse 6 entlang von linienförmigen Auflageflächen auf den wellenförmigen oder kantenförmigen Erhebungen mit gewissem Anpressdruck auf und wird über diese hinweg geschoben, wodurch ein sukzessives Weiterrasten der Führungshülse 6 am Wellensegment 4 erhalten wird. Dies führt zu einer spielfreien Führung der Führungshülse 6 am Wellensegment 4, ohne dass dabei ein Verkanten beider Komponenten auftritt.

Figur 6 zeigt ein zweites Ausführungsbeispiel eines Drehlagers, welches wiederum Bestandteil eines Scharniers ist. Die Ausbildungen und Anordnungen des lagernden Lagerteils 3 und des gelagerten Lagerteils 2 entsprechen dem Ausführungsbeispiel gemäß Figur 1. In weiterer Übereinstimmung mit der Ausführungsform gemäß Figur 1 weist das Drehlager gemäß Figur 4 ein Einlegeteil 1 auf.

Das Einlegeteil 1 ist wiederum mehrteilig ausgebildet und bildet eine vorgefertigte Montageeinheit, die in eine Gussform eingelegt werden kann, in welche die Gussmasse zur Ausbildung der Lagerteile 2, 3 einführbar ist.

Das Einlegeteil 1 gemäß Figur 6 weist ein Wellensegment 4 auf, welches wiederum von einem Massivteil oder rohrförmigen Teil aus Stahl gebildet ist. Das Wellensegment 4 ist im Wesentlichen zylindrisch ausgebildet und rotationssymmetrisch zu seiner Längsachse ausgebildet.

Wie aus Figur 6 ersichtlich, weisen die identisch ausgebildeten längsseitigen Enden des Wellensegments 4 einen gegenüber dem zentralen Teil des Wellensegments 4 geringeren Durchmesser auf. Die längsseitigen Enden bilden dabei ebenso wie der zentrale Teil des Wellensegments 4 kreiszylinderförmige Segmente des Wellensegments 4.

Auf die längsseitigen Enden der Wellensegmente 4 ist jeweils eine Lagerbuchse 5 aufgebracht. Die Lagerbuchsen 5 als weitere Bestandteile bestehen bevorzugt aus Zink. Die Formen der identisch ausgebildeten Lagerbuchsen 5 entsprechen im Wesentlichen der Ausführungsform gemäß Figur 1. Die Wandstärken der Lagerbuchsen 5 sind so ausgebildet, dass deren Mantelflächen mit der Mantelfläche des zentralen Teils des Wellensegments 4 fluchten. Im Unterschied zur Ausführungsform gemäß Figur 1 sind die freien Enden des Wellensegments 4 spielfrei und drehbar in den Lagerbuchsen 5 gelagert. Die vorderen Ränder der Lagerbuchsen 5 liegen dabei spielfrei an den Absätzen zwischen den längsseitigen Enden und dem zentralen Teil des Wellensegments 4.

Zur Ausbildung des Drehlagers wird das Einlegeteil 1 in die nicht dargestellte Gussform eingelegt und dann die Gussmasse in die Gussform eingeführt. Hiermit erfolgt die Anformung des lagernden Lagerteils 3 an die Lagerbuchsen 5 als stationären Elementen des Drehlagers. Weiterhin erfolgt hiermit die Anformung des gelagerten Lagerteils 2 an den zentralen Teil des Wellensegments 4, welche die drehbaren Komponenten des Drehlagers bilden. Der zentrale Teil des Wellensegments 4 kann insbesondere auch einen nicht kreisförmigen Querschnitt aufweisen.

Durch eine geeignete Ausführung der Gussform mit Blenden wird wiederum erreicht, dass die Zwischenräume I zwischen dem lagernden Lagerteil 3 und dem gelagerten Lagerteil 2 frei bleiben und insbesondere keine Gussmasse in die Zwischenräume zwischen Lagerbuchsen 5 und Wellensegment 4 gelangt.

Ein wesentlicher Vorteil der Anordnung gemäß Figur 6 besteht darin, dass beide Lagerbuchsen 5 als Drehlagerungen in einem Einlegeteil 1 integriert sind. Dabei sind die Lagerbuchsen 5 über das Wellensegment 4 verbunden, welches für eine exakte Ausrichtung der Lagerbuchsen 5 zueinander in einer mit der Symmetrieachse zusammenfallenden Drehachse sorgt. Da das Einlegeteil 1 eine vormontierte Einheit bildet, bleibt diese Zuordnung auch während des Gießprozesses erhalten.

### Bezugszeichenliste

- (1): Einlegeteil
- (2): Lagerteil
- (3): Lagerteil
- (4): Wellensegment
- (5): Lagerbuchse
- (6): Führungshülse

## Patentansprüche

1. Drehlager für einen Lagerkörper bestehend aus einem lagernden Lagerteil und einem bezüglich diesem drehbar gelagerten Lagerteil, umfassend ein Einlegeteil, **dadurch gekennzeichnet, dass** das Einlegeteil (1) ein zylindrisches Wellensegment (4) aufweist, wobei auf jedem längsseitigen Ende des Wellensegments (4) eine Lagerbuchse (5) aufsitzt und fest mit diesem verbunden ist, und wobei die Lagerbuchsen (5) fest mit dem lagernden Lagerteil (3) verbunden sind, und dass als weitere Komponente des Einlegeteils (1) eine auf der Mantelfläche des zwischen den Enden liegenden zentralen Teils des Wellensegments (4) drehbare Führungshülse (6) vorgesehen ist, deren äußere Mantelfläche mit dem gelagerten Lagerteil (2) fest verbunden ist.

2. Drehlager nach Anspruch 1, **dadurch gekennzeichnet, dass** die Führungshülse (6) von einem hohlzylindrischen Massivteil gebildet ist.

3. Drehlager nach Anspruch 1, **dadurch gekennzeichnet, dass** die Wand der hohlzylindrischen Führungshülse (6) von einem mehrlagigen, spiralförmigen Flachmaterial gebildet ist.

4. Drehlager nach Anspruch 1, **dadurch gekennzeichnet, dass** die Führungshülse (6) eine strukturierte Kontur mit in deren Längsrichtung verlaufenden linienförmigen Auflageflächen auf dem Wellensegment (4) aufweist.

5. Drehlager nach Anspruch 3, **dadurch gekennzeichnet, dass** die Führungshülse (6) einen wellenförmigen oder zackenförmigen Querschnitt aufweist.

6. Drehlager nach Anspruch 4 oder 5, **dadurch gekennzeichnet, dass** die Führungshülse (7) eine mehrlagige Spirale bildet.

7. Drehlager nach einem der Ansprüche 1 bis 6, **dadurch gekennzeichnet, dass** das Wellensegment (4) im Bereich der Führungshülse (6) einen kreisförmigen Querschnitt aufweist.

8. Drehlager nach einem der Ansprüche 3 bis 6, **dadurch gekennzeichnet, dass** das Wellensegment (4) im Bereich der Führungshülse (6) eine Außenkontur mit in dessen Längsrichtung verlaufenden Kanten oder Wellenzügen aufweist.

9. Drehlager nach einem der Ansprüche 1 bis 8, **dadurch gekennzeichnet, dass** die Führungshülse (6) eine über ihre Länge konstanten Querschnitt aufweist.

10. Drehlager nach einem der Ansprüche 1 bis 9, **dadurch gekennzeichnet, dass** die Führungshülse (6) spielfrei oder spielarm auf der Mantelfläche des Wellensegments (4) umläuft.

11. Drehlager nach einem der Ansprüche 1 bis 10, **dadurch gekennzeichnet, dass** die Führungshülse (6) mit ihren längsseitigen Rändern zwischen den Rändern der Lagerbuchsen (5) liegt.

12. Drehlager nach einem der Ansprüche 1 bis 11, **dadurch gekennzeichnet, dass** die äußeren Mantelflächen der Führungshülse (6) und der Lagerbuchsen (5) bündig abschließen.

13. Drehlager nach einem der Ansprüche 1 bis 12, **dadurch gekennzeichnet, dass** die Ränder der Lagerbuchse (5) über das lagernde Lagerteil (3) hervorstehen und die Ränder der Führungshülse (6) über das gelagerte Lagerteil (2) hervorstehen, und dass diese freiliegenden Ränder der Führungshülse (6) und der Lagerbuchse (5) miteinander fluchtende Mantelflächen aufweisen.

14. Drehlager für einen Lagerkörper bestehend aus einem lagernden Lagerteil und einem bezüglich diesem drehbar gelagerten Lagerteil, umfassend ein Einlegeteil, **dadurch gekennzeichnet, dass** das Einlegeteil (1) ein zylindrisches Wellensegment (4) aufweist, dessen längsseitige Enden in Lagerbuchsen (5) als weiteren Bestandteilen des Einlegeteils (1) drehbar gelagert sind, wobei die Mantelfläche des zwischen den Lagerbuchsen (5) liegenden zentralen Teils des Wellensegments (4) mit dem gelagerten Teil fest verbunden ist, und wobei die äußeren Mantelflächen der Lagerbuchsen (5) fest mit dem lagernden Lagerteil (3) verbunden sind.

15. Drehlager nach Anspruch 14, **dadurch gekennzeichnet, dass** die längsseitigen Enden des Wellensegments (4) spielfrei in den Lagerbuchsen (5) geführt sind.

16. Drehlager nach einem der Ansprüche 14 oder 15, **dadurch gekennzeichnet, dass** das Wellensegment (4) im Bereich der längsseitigen Enden, auf welchen die Lagerbuchsen (5) aufsitzen, einen kleineren Durchmesser als im Bereich des zentralen Wellensegments (4) aufweist.

17. Drehlager nach Anspruch 16, **dadurch gekennzeichnet, dass** die äußeren Mantelflächen der auf den Enden des Wellensegments (4) aufsitzenden Lagerbuchsen (5) mit der äußeren Mantelfläche des Wellensegments (4) fluchten.

18. Drehlager nach einem der Ansprüche 1 bis 17, **dadurch gekennzeichnet, dass** das Wellensegment (4) des Einlegeteils (1) von einem Massivteil gebildet ist.

19. Drehlager nach einem der Ansprüche 1 bis 17, **dadurch gekennzeichnet, dass** das Wellensegment (4) von einem rohrförmigen Teil gebildet ist.

20. Drehlager nach einem der Ansprüche 1 bis 19, **dadurch gekennzeichnet, dass** die Lagerbuchsen (5) eine hohlzylindrische Form aufweisen.

21. Drehlager nach Anspruch 20, **dadurch gekennzeichnet, dass** jede Lagerbuchse (5) an einem längsseitigen Ende mit einem Boden abgeschlossen ist, und dass am gegenüberliegenden Ende die Lagerbuchse (5) zur Aufnahme des Wellensegments (4) offen ist.

22. Drehlager nach einem der Ansprüche 20 oder 21, **dadurch gekennzeichnet, dass** die Lagerbuchsen (5) der Einlegeteile (1) identisch ausgebildet sind.

23. Drehlager nach einem der Ansprüche 1 bis 22, **dadurch gekennzeichnet, dass** das Wellensegment (4) aus Stahl besteht, und dass die restlichen Komponenten des Einlegeteils (1) aus Zink bestehen.

24. Drehlager nach einem der Ansprüche 1 bis 22, **dadurch gekennzeichnet, dass** die Komponenten des Einlegeteils (1) aus Kunststoff bestehen.

25. Drehlager nach einem der Ansprüche 1 bis 24, **dadurch gekennzeichnet, dass** das Einlegeteil (1) eine vorgefertigte und funktionsfähige Montageeinheit bildet.

26. Drehlager nach Anspruch 25, **dadurch gekennzeichnet, dass** an das Einlegeteil (1) in einem Gießprozess das lagernde Lagerteil und das gelagerte Lagerteil anformbar sind.

27. Drehlager nach Anspruch 25, **dadurch gekennzeichnet, dass** die Gussmasse zur Ausbildung des lagernden Lagerteils und des gelagerten Lagerteils aus Metall oder Kunststoff besteht.
